# EUROPEAN PATENT APPLICATION

(11) **EP 3 661 147 A1**
(43) Date of publication of application: **03.06.2020**
(21) Application number: 17919246.3
(22) Date of filing: 25.07.2017
(51) Int. Cl.: H04L 29/06

(54) **CONTROL METHOD, CONTROL APPARATUS AND CONTROL SYSTEM FOR INTELLIGENT DEVICE**

(71) Applicant: Cloudminds (Shenzhen) Robotics Systems Co., Ltd., Shenzhen, Guangdong 518000 (CN)
(72) Inventor: WANG, Huatao, Shenzhen Guangdong 518000 (CN)
(74) Representative: Gulde & Partner
(86) International application number: PCT/CN2017/094311
(87) International publication number: WO 2019/019018

(57) **Abstract**

A method, apparatus and system for controlling a smart device are disclosed. The method includes: judging whether a control terminal and a selected smart home device (11, 12, 13) are located in a same local area network (21, 22); establishing a connection to a smart home device management platform (40) over the local area network (21, 22) if the control terminal and the selected smart home device (11, 12, 13) are located in the same local area network, the smart home device management platform (40) recording one or a plurality of smart home devices (11, 12, 13); enabling a virtual private network (VPN) module (703) and establishing a connection to the smart home device management platform (40) over a VPN channel if the control terminal and the selected smart home device (11, 12, 13) are not located in the same local area network; and controlling a corresponding smart home device by the smart home device management platform (40).

## Description

### TECHNICAL FIELD

The present application relates to the technical field of smart devices, and in particular, relates to a method, apparatus and system for controlling a smart device.

### BACKGROUND

With flourish of the Internet of things (IoT) technology, and constant development of the embedded Internet technology, smart home appliances are extensively applied in households. The smart home devices each have a logic operation unit and a communication module, and data communication connections may be established between the smart home devices over wired or wireless communication networks or corresponding data instructions may be executed. During use, a user may remotely control the smart home devices by a control terminal (for example, a smart phone, a tablet computer or the like).

A conventional smart home device typically carries out data communication over a wireless network (for example, a WiFi network) established by a home router. The smart home devices are connected to the wireless network. The user remotely controls the smart home device by the control terminal (for example, a smart phone). For example, the user may define operation parameters or functions of the smart home devices, or control, during outside activities, whether to enable or disable the smart home devices in the household.

During practice of the related art, the applicants have identified the following problems: Data transmission between the smart device and the control terminal is absolutely exposed in a public network environment, and suffers from great security vulnerabilities. Therefore, the smart home device is vulnerable to attacks, and thus loss may be caused to the user.

### SUMMARY

At least one embodiment of the present application at least solves the problem that a smart home device has poor security, and data transmission is directly exposed in a public network environment and vulnerable to attacks in the related art.

In view of the above, one technical solution employed by embodiments of the present application is to provide a method for controlling a smart device. The method includes: judging whether a control terminal and a selected smart home device are located in a same local area network; establishing a connection to a smart home device management platform over the local area network if the control terminal and the selected smart home device are located in the same local area network, the smart home device management platform recording one or a plurality of smart home devices; enabling a virtual private network (VPN) module and establishing a connection to the smart home device management platform over a VPN channel if the control terminal and the selected smart home device are not located in the same local area network; and controlling a corresponding smart home device by the smart home device management platform.

In view of the above, another technical solution employed by embodiments of the present application is to provide an apparatus for controlling a smart device. The apparatus includes: a local area network judging module, configured to judge whether a control terminal and a selected smart home device are located in a same local area network; a network connecting module, configured to establish a connection to a smart home device management platform by the local area network when the control terminal and the selected smart home device are located in the same local area network, the smart home device management platform recording one or a plurality of smart home devices; a VPN module, configured to establish a connection to the smart home device management platform over a VPN channel; and a control module, configured to control a corresponding smart home device by the smart home device management platform.

In view of the above, still another technical solution employed by embodiments of the present application is to provide a system for controlling a smart device. The system includes: a smart home device management platform, a router and a control terminal; wherein the router is configured to provide at least two local area networks that are isolated from each other, and smart home devices are located in one of the local area networks provided by the router; the smart home device management platform is connected, over a VPN channel, to the local area network where the smart home device is located; and the control terminal includes the apparatus for controlling the smart device as described above, and is configured to, when accessing the local area network provided by the router, judge whether the smart device and a selected smart home device are located in a same local area network, establish a connection to a smart home device management platform over the local area network and send a control instruction if the control terminal and the selected smart home device are located in the same local area network; and enable a VPN module and establish a connection to the smart home device management platform over a VPN channel and send a control instruction if the control terminal and the selected smart home device are not located in the same local area network; and the smart home device management platform is configured to control the selected smart home device according to the received control instruction.

In view of the above, yet still another technical solution employed by embodiments of the present application is to provide an electronic device. The electronic device includes: at least one processor and a memory communicably connected to the at least one processor; wherein the memory stores an instruction program executable by the at least one processor, wherein, the instruction program, when being executed by the at least one processor, cause the at least one processor to perform the method for controlling the smart device as described above.

In view of the above, yet still another technical solution employed by embodiments of the present application is to provide a computer program product. The computer program product includes: a non-volatile computer-readable storage medium and computer program instructions stored in the non-volatile computer-readable storage medium; wherein the computer program instructions include instructions, which, when being executed by a processor, cause the processor to perform the method for controlling the smart device as described above.

In the method, apparatus and system for controlling the smart device according to the embodiments of the present application, an independent local area network is allocated to a smart home device, and a virtual private network is configured therefor, such that the smart device is isolated from a public network environment. The smart home device is under protection of the virtual private network. In this way, security of the smart home device in the network environment is effectively improved, and normal network operation is not affected.

### BRIEF DESCRIPTION OF THE DRAWINGS

One or more embodiments are illustrated by way of example, and not by limitation, in the figures of the accompanying drawings, wherein components having the same reference numeral designations represent like components throughout. The drawings are not to scale, unless otherwise disclosed.
FIG 1 is a schematic diagram of an application scenario according to an embodiment of the present application;
FIG. 2 is a schematic flowchart of a method for controlling a smart device according to an embodiment of the present application;
FIG. 3 is a schematic diagram of an application scenario according to another embodiment of the present application;
FIG. 4 is a schematic diagram of an application scenario according to another embodiment of the present application;
FIG. 5 is a schematic flowchart of a method for recording a smart home device according to an embodiment of the present application;
FIG. 6 is a schematic flowchart of a local area network judging method according to an embodiment of the present application;
FIG. 7 is a schematic flowchart of an apparatus for controlling a smart device according to an embodiment of the present application;
FIG. 8 is a functional block diagram of a local area network judging module according to an embodiment of the present application;
FIG. 9 is a schematic structural diagram of an electronic device according to an embodiment of the present application.

### DETAILED DESCRIPTION

For clearer descriptions of the objectives, technical solutions, and advantages of the present application, the present application is further described with reference to specific embodiments and attached drawings. It should be understood that the specific embodiments described herein are only intended to explain the present application instead of limiting the present application.

The smart home device may specifically refer to a smart appliance (for example, a smart television, a smart air-conditioner, a smart washing machine) having a logic operation unit, or a control device of another type (for example, a smart switch for a light). The smart home device at least includes a communication module, which may be communicatively connected to a wireless or wired network and receive a control instruction or upload data, such that a user remotely controls and manages the smart home device.

Based on the Internet of things (IoT) technology, various types of smart home devices (including lamination systems, curtain control system, audio and video devices, air-conditioner control systems, security management systems, digital cinema systems and the like) may be organically to construct a smart home system which provides information interactions and smart services for the user.

In the smart home system, the user may manage or control various smart devices in the smart home system based on corresponding mobile application software. for example, the mobile application "MIJIA" released by Xiaomi or "JD Smartcloud" released by JD.

The management and control of the smart home devices are generally based on cloud services. That is, by a control terminal, the user accesses a cloud platform established by a service provider, and controls and manages the smart devices in a smart home system by the cloud platform.

The cloud platform is located in an external public network. Therefore, in the management and remote control, data transmissions are all exposed in a public network environment. As a result, the smart home devices are very vulnerable to attacks.

For enhanced security of the smart home system and less unnecessary loss of the user, appropriate protection may be provided for the network environment of the smart home system by using the method for controlling the smart device according to the embodiments of the present application.

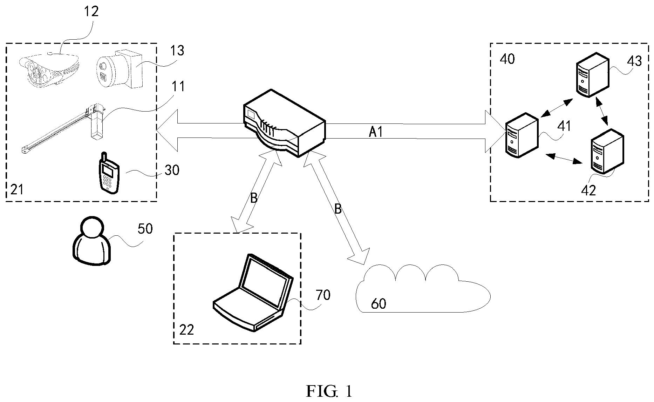

FIG. 1 illustrates an application environment of a smart home device according to an embodiment of the present application. As illustrated in FIG. 1, the application environment includes: a plurality of smart home devices (11, 12 and 13), local area networks (21 and 22), a control terminal 30, a smart home device management platform 40, a user 50 and a public network 60.

The smart home device may be specifically any suitable household electronic device which may be remotely controlled, for example, an embedded device. The smart home devices may be electronic devices pertaining to various types of systems (for example, a motorized curtain 11, a camera 12 and an optical sensor 13 as illustrated in FIG. 1), and configured to practice hardware foundations for implementing different functions of the smart home system, for example, appliance control, illumination control, call remote control, indoor and outdoor remote control, safety alarming, heating and ventilation control, infrared forwarding, programmable timing control and the like functions.

The local area network may specifically be any suitable local area network constructed by wireless or wireless devices or a subnet of the local area network. The local area network covers a user's house, and provides communicative connections for a smart home device 10. The local area network may communicate with a public network, and acquire data from the public network or send data to the public network.

In this embodiment, the local area network is a WiFi network constructed by a household router. The smart home device may connect to the WiFi network, and establish a communicative connection with the external public network (for example, the Internet) over the WiFi network.

The control terminal 30 may specifically be any type of terminal device that is capable of running one or a plurality of mobile software applications, for example, a smart phone, a tablet computer, a personal computer, a wearable device or the like. The control terminal 30 further includes one or more different user interaction devices, including, a touch screen, a mouse, a motion sensing camera, a microphone or another input/output device. The user may input an instruction to the control terminal 30 or receive feedback information from the control terminal 30 via the user interaction device.

The smart home device management platform 40 may be specifically a cloud platform implemented based on any suitable type of servers or server groups. The smart home device management platform 40 may be provided by a service provider providing smart home services, and control or manage the smart devise as a control platform of the smart home devices.

The public network 60 may be specifically a network providing public network services and having a plurality of different resource sites, for example, the Internet. The local area network 20 is connected to the public network 60, and provides data from the public network 60 for the devices connected to the local area network 20, and connects the smart home devices to the smart home device management platform 40.

In this embodiment, the smart home server 40 is deployed in the public network 60. The local area network 20 to which the smart home device is connected is communicatively connected to the smart home server 40 over the public network, and acquires a control instruction or the above data.

The user 50 may enable the corresponding mobile application software on the control terminal 30 to establish a connection with the smart home device management platform 40. Afterwards, by the mobile application software, the smart home device is remotely controlled. For example, turn-on or turn-off of the air-conditioner or timing-based turn-off of the light is controlled.

The user 50 may also acquire a running state or an operating state of the current smart home device 10 by the control terminal 30. For example, the smart home device 10 may return device operation running information thereof to the smart home device management platform 40, and the control terminal 30 may read the corresponding device running information from the smart home device management platform 40 and exhibits the information to the user 50.

As illustrated in FIG. 1, in a system for controlling a smart home device according to an embodiment of the present application, for enhancing security of the smart home device, at least two independent or isolated local area networks (21 and 22) are constructed. The smart home device 10 is connected to the local area network 21. Herein, for brevity of description, FIG. 1 uses two local area networks as examples, and the local area network where the smart home device 10 is located is referred to as a home local area network.

In some embodiments, the isolated local area networks 21 and 22 may be specifically isolated local area networks that are constructed by division based on the service set identifier (SSID) technology. A WiFi router divides , by the SSID, a WiFi network into a plurality of subnets that are isolated from each other. Each subnet has a DHCP service and a DNS service that are independently configured.

The smart home local area network 21 transmits data to the smart home device management platform 40 and receives the control instruction or uploads the device running information over a dedicated data channel by the virtual private network (VPN) technology.

The other local area network (that is, the local area network 22) is directly connected to the public network 60, and provides network services for the user. That is, a personal computer or the like terminal device of the user may access the public network 60 over the local area network 22.

In some embodiments, as illustrated in FIG. 1, for practice of a VPN service, the home smart device management platform 40 may specifically include: a VPN server 41, an application server 42 and a DNS service 43.

The application server 42 is configured to provide management and control services for the smart home device. For example, the application server 42 receives a control instruction from the control terminal, and enables the corresponding smart home device to perform a corresponding action or implement a corresponding function.

The VPN server 41 is configured to practice a dedicated data channel connection with the home local area network 21. A VPN is a dedicated network established in the public network, and implements remote access by encryption of data packets and translation of destination addresses of the data packets, and ensures security of data transmission. In this embodiment, the VPN is practiced by the VPN server 41, and employs a form of SSL VPN.

The DNS server 43 is configured to provide DNS services. The router defines the DNS service of the home local area network 21 as an IP address of the DNS server 43, wherein the IP address is an intranet IP address. That is, the DNS server is configured to negotiate IP address allocation between intranets of the home local area network 21 and the smart home device management platform 40.

Correspondingly, the router forming the home local area network 21 also includes a corresponding VPN module. The VPN module may have a route management function, and is capable of managing intranet network segments of the home local area network 21 and the smart home device management platform 40, such that the two network segments may be interconnected.

In this embodiment, data is transmitted between the home local area network 21 and the smart home device management platform 40 over a dedicated data channel. Therefore, the smart home device 10 is under protection of the VPN, and is isolated from and independent of the public network. This ensures data security of the smart home device 10.

Since the home local area network 21 and the smart home device management platform 40 are isolated from and independent of the public network. Therefore, the control terminal 30 needs to be added to the data transmission process between the smart home device 10 and the smart home device management platform 40 by the method for controlling the smart device according to the embodiment of the present application, such that the user is capable of controlling the smart home device 10.

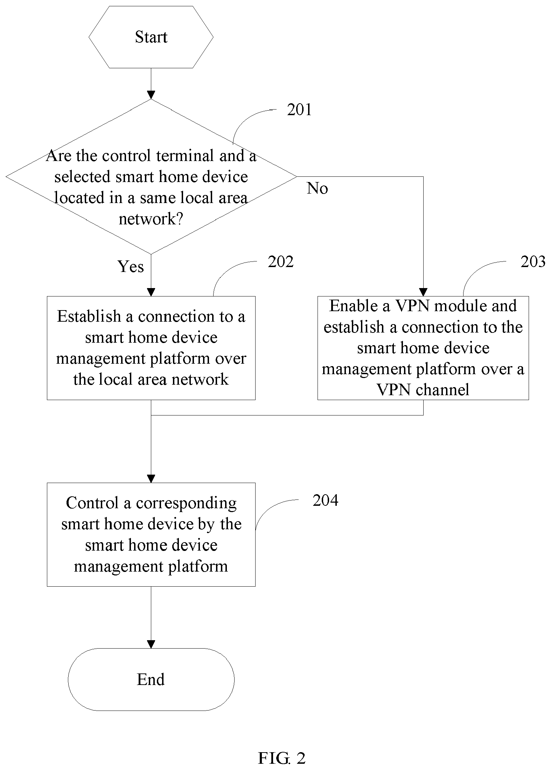

FIG. 2 is a schematic flowchart of a method for controlling a smart device according to an embodiment of the present application. As illustrated in FIG. 2, the control terminal 30 may perform the following steps:

201: Whether the control terminal and a selected smart home device are located in a same local area network is judged. If the control terminal and the selected smart home device are located in the same local area network, step 202 is performed; and otherwise, step 203 is performed.

The selected smart home device refers to a smart home device which the user controls a terminal to select and the user needs to control. Nevertheless, the smart home devices available for selection by the user shall be smart home devices that are recorded in the smart home device management platform or whose device information is registered in the smart home device management platform. That is, the smart home device management platform has acknowledged that the device is in an enabled state and relegated information of the device such as a destination address and the like.

Since each smart home device has its own corresponding control manner or executable functions, for control of the smart home device, a destination address to which an instruction is to be sent needs to be determined. Therefore, the smart home device management platform 40 may only send a corresponding control instruction to a recorded smart home device, but fails to control an unknown device.

In daily use, the control terminal may access any local area network provided by the router. Therefore, a connection fashion of the control terminal may be determined only after the local area network accessed by the control terminal is judged.

202: A connection to a smart home device management platform is established over the local area network. The smart home device management platform records one or a plurality of smart home devices.

As described above, the home local area network is a local area network which establishes a VPN connection to the smart home device management platform, and the two intranets may communicate with each other. Therefore, when the control terminal and the smart home device are located in the same local area network, the control terminal is capable of directly implementing data communication with the smart home device management platform over the dedicated data transmission channel.

FIG. 1 illustrates an application scenario corresponding to step 202 according to an embodiment of the present application. As illustrated in FIG. 1, the control terminal 30 is located in the home local area network 21, and may communicate with the smart home device management platform 40 over a dedicated data transmission channel A1. Other electronic devices 70 (for example, computers) access the public network 60 over the local area network 22, and a data transmission channel B under the public network environment is established.

203: A VPN module is enabled and a connection to the smart home device management platform is established over a VPN channel.

The VPN is an approach of establishing a dedicated network and carrying out encrypted communication. The smart home device management platform is under protection of the VPN (that is, a public network IP address in the public network is provided by a VPN server 41). Therefore, when the control terminal is in the public network environment (for example, when the control terminal accesses another local area network), the VPN module needs to be enabled to establish the corresponding dedicated data channel to the smart home device management platform.

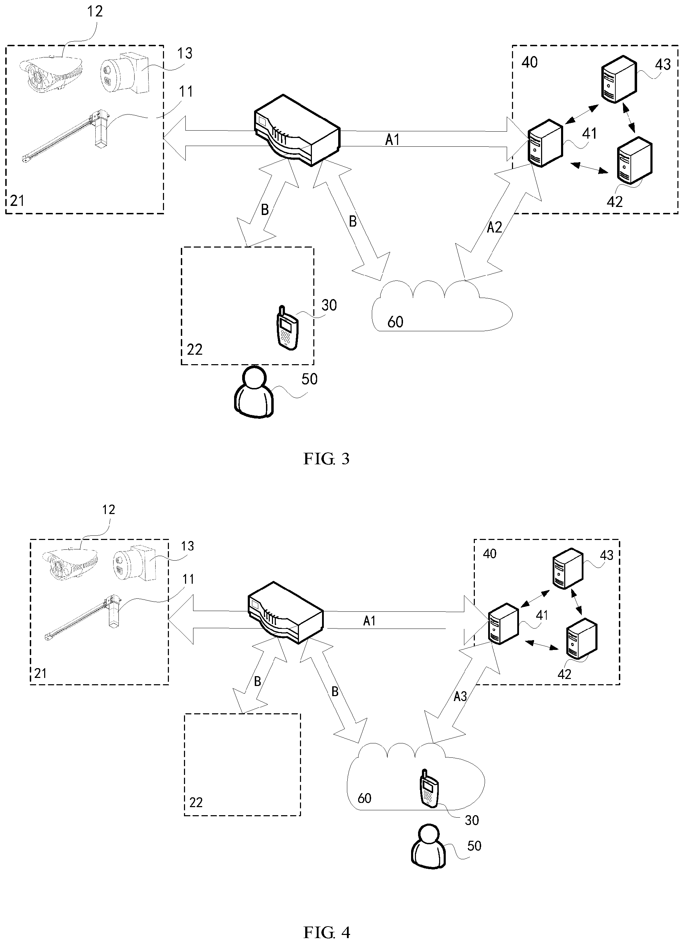

FIG. 3 illustrates an application scenario corresponding to step 203 according to an embodiment of the present application. As illustrated in FIG. 3, the control terminal 30 may be in other local area networks, and access the public network 60 by the router. Afterwards, the control terminal 30 may establish a dedicated data transmission channel A2 to the VPN server 41 by enabling the VPN module, and thus communicates with the smart home device management platform 40.

FIG. 4 illustrates another application scenario corresponding to step 203 according to an embodiment of the present application. As illustrated in FIG. 4, the control terminal 30 does not pertain to any local area network provided by the router. Instead, the control terminal 30 may enable the VPN module in the public network environment, and establish a dedicated data transmission channel A3 to the VPN server 41, and thus communicates with the smart home device management platform 40.

204: A corresponding smart home device is controlled by the smart home device management platform.

After the control terminal 10 establishes the connection, a control instruction corresponding to an intention of the user to the smart home device management platform, such that the smart home device management platform controls the related smart home device.

In the embodiment of the present application, the control terminal is capable of automatically judging whether the smart device is in the home local area network 21, and accordingly performing a corresponding network connection switch operations (that is, selecting to enable or disenable the VPN module).

The smart home device and the smart home device management platform are both in the insolated and independent network environment, and are not vulnerable to attacks. In addition, the user may conveniently access the relatively independent network between the smart home device and the smart home device management platform. In this way, no adverse impact is caused to normal use of the user while data security is ensured.

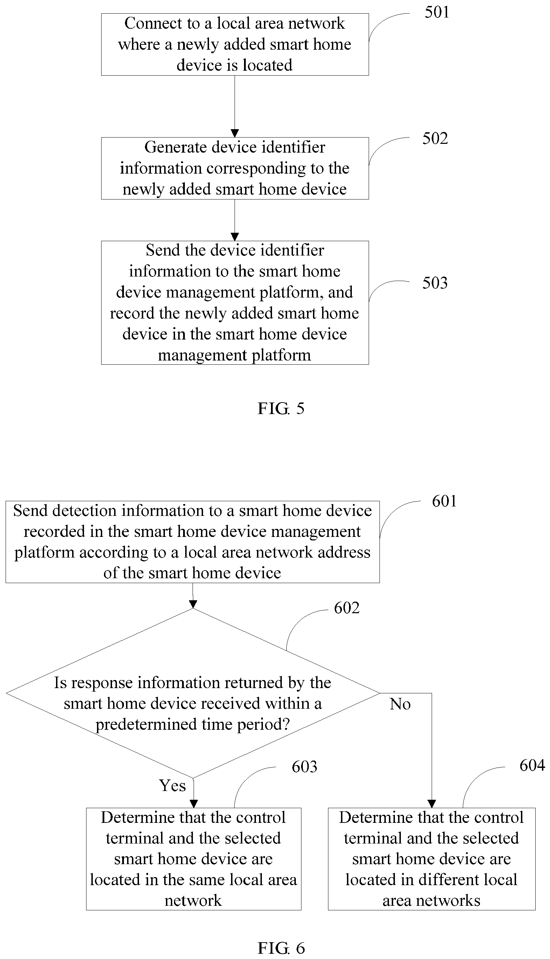

As described above, in the process of constructing a home smart system, the smart home device needs to be registered or recorded in the smart home device management platform. The registration process of the smart home device may be performed by the control terminal. FIG. 5 illustrates a registration process of the smart home device according to an embodiment of the present application.

As illustrated in FIG. 5, the method includes the following steps:

501: A local area network where a newly added smart home device is located is connected.

When a user is at home, the user may select a local area network that he or she desires to access. For detection of the new smart home device in the control terminal, firstly the control device needs to be connected to a control local area network.

502: Device identifier information corresponding to the newly added smart home device is generated.

The control terminal may generate, based on the read information of the smart home device (over the control local area network), the device identifier information for controlling the smart device.

The device identifier information may include different device-related information of the smart home device, for example, device serial number, device type or version of used control functional software or the like.

503: The device identifier information is sent to the smart home device management platform, and the newly added smart home device is recorded in the smart home device management platform.

In this case, the control terminal is in the control local area network. Therefore, the generated device identifier information may be correspondingly sent to the smart home device management platform to complete recording and registration of the smart home device. After the smart home device management platform receives the device identifier information, the smart home device is in a known state. In this case, the smart home device management platform is capable of remotely controlling the smart home device.

The control terminal may specifically automatically judge whether the control terminal and the smart home device are located in the same local area network in a plurality of suitable ways. In some embodiments, the automatic judgment may be performed specifically in the way as illustrated in FIG. 6.

601: Detection information is sent to a smart home device recorded in the smart home device management platform according to a local area network address of the smart home device.

The detection information refers to a data packet similar to a detection packet, and is used in detection or sounding. The data packet may be a very small data packet, and has not specific load. The detection information has a designated destination address when being sent.

The control terminal may select, based on the device identifier information used in device registration, one device as a destination to which the detection information is sent, and send the specific detection information to the destination.

602: Whether response information returned by the smart home device is received within a predetermined time period is judged, wherein the response information is triggered and generated by the smart home device according to the detection information. If the response information is received, step 603 is performed; and otherwise, step 604 is performed.

Upon receiving the detection information, the smart home device may return the response information corresponding to the detection information to the source of the detection information. That is, the response information is triggered and generated by the detection information. The response information is feedback information that is sent by the smart home device control terminal, and indicates that the detection information is received.

603: It is determined that the control terminal and the selected smart home device are located in the same local area network. Within the same local area network, the speed of data transmission between different devices in the local area network is high. Therefore, the control terminal is capable of quickly receiving the response information from the smart home device.

604: It is determined that the control terminal and the selected smart home device are located in different local area networks. A control local area network is isolated from the other local area networks, and the smart home device is incapable of crossing different networks. Therefore, when the control terminal and the selected smart home device are located in different local area networks, the detection information or the response information may fail to be timely transmitted, and the control terminal may fail to acquire the response information.

In the detection based on the detection information. The data packet of the detection information is small, which may not cause any adverse impact to the normal data communication in the local area network. In addition, the detection is carried out based on the transmission features of the local area network, and the time elapsed for the detection is very short, such that the control terminal is capable of quickly making the judgment and selecting the corresponding connection fashion, thereby improving use experience for the user.

In the above embodiment, the control terminal employs the way of sending the detection information to the specific destination address, and judges whether the control terminal is located in the same local area network. In some other embodiments, the control terminal may also perform the judgment step in a broadcasting fashion.

The fashion specifically includes: first, broadcasting the detection information in the local area network where the control terminal is located; and determining whether the control terminal is located in the same local area network according to whether the response information from any smart home device is received.

The smart home device may be disconnected from the local area network due to a plurality of different factors (for example, device failure, power failure, or removal). Therefore, by broadcasting the detection information, whether the control terminal is located in the same local area network may be more reliably determined, as long as one smart home device receives the detection information and returns the response information. This prevents judgment errors due to failure of the target smart home device.

An embodiment of the present application further provides an apparatus for controlling a smart home device corresponding to the above method embodiment. A control terminal may include the apparatus for controlling the smart home device to perform the method for controlling the smart device according to the above embodiment.

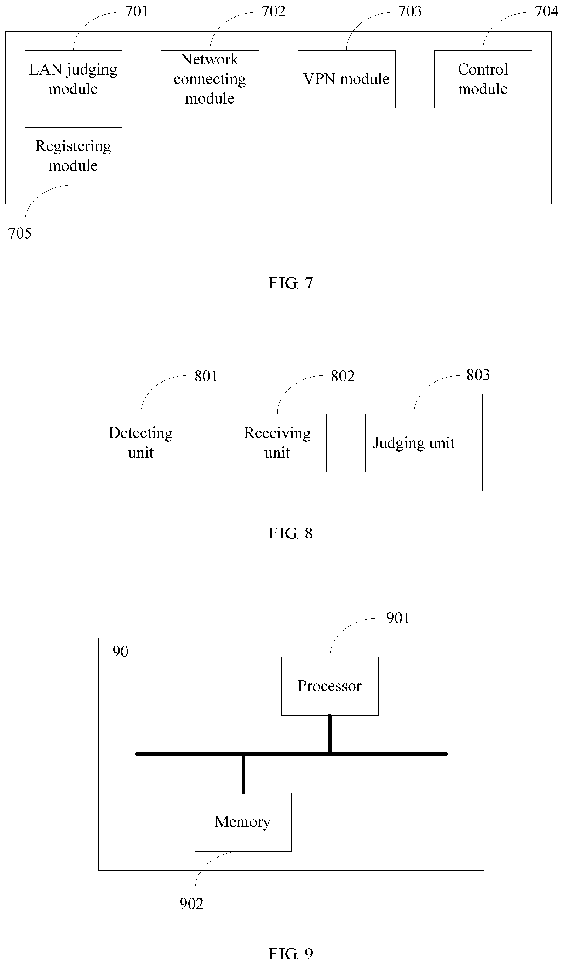

As illustrated in FIG. 7, the apparatus includes: a local area network judging module 701, a network connecting module 702, a VPN module 703 and a control module 704.

The local area network judging module 701 is configured to judge whether a control terminal and a selected smart home device are located in a same local area network. The network connecting module 702 is configured to establish a connection to a smart home device management platform by the local area network when the control terminal and the selected smart home device are located in the same local area network, wherein the smart home device management platform records one or a plurality of smart home devices. The VPN module 703 is configured to establish a connection to the smart home device management platform over a VPN channel. The control module 704 is configured to control a corresponding smart home device by the smart home device management platform.

In some embodiments, to complete registration of a newly added smart device on the smart device management platform, as illustrated in FIG. 7, the apparatus may further include: a registering module 705.

In this embodiment, the network connecting module 702 is further configured to be connected to a local area network where a newly added smart home device is located. The registering module 705 is configured to generate device identifier information corresponding to the newly added smart home device; and send the device identifier information to the smart home device management platform, and record the newly added smart home device in the smart home device management platform.

Specifically, the local area network judging module 701 includes the functional units as illustrated in FIG. 8 to implement the automatic judgment function of the local area network. As illustrated in FIG. 8, the local area network judging module 701 may specifically include: a detecting unit 801, a receiving unit 802 and a judging unit 803.

The detecting unit 801 is configured to send detection information to a smart home device recorded in the smart home device management platform according to a local area network address of the smart home device. The receiving unit 802 is configured to receive response information returned by the smart home device within a predetermined time period, the response information being triggered and generated by the smart home device according to the detection information.

The judging unit 803 is configured to judge whether the response information returned by the smart home device is received within a predetermined time period; and determine that the control terminal and the selected smart home device are located in the same local area network if the response information returned by the smart home device is received within the predetermined time period, and determine that the control terminal and the selected smart home device are located in different local area networks if the response information returned by the smart home device is not received within the predetermined time period.

In some other embodiments, for improvement of reliability of judgment of the local area network, the detection information may be sent in a broadcasting fashion. Correspondingly, the detecting unit 801 is specifically configured to broadcast detection information within a current local area network. The receiving unit 802 is specifically configured to receive response information returned by a smart home device recorded in the smart home device management platform, the response information being triggered and generated by the smart home device according to the detection information.

The judging unit 803 is configured to judge whether the response information returned by the at least one smart home device recorded in the smart home device management platform is received; and determine that the control terminal and the selected smart home device are located in the same local area network if the response information returned by the smart home device is received within the predetermined time period, and determine that the control terminal and the selected smart home device are located in different local area networks if the response information returned by the smart home device is not received within the predetermined time period.

It should be noted that the method for controlling the smart device according to the above embodiment and the apparatus for controlling the smart home device are based on the same inventive concept. Therefore, the steps of the specific embodiments of the method may be performed by the corresponding functional modules. The specific functions of the functional modules may correspond to the method steps in the method for controlling the smart device, which are not described herein any further.

FIG. 9 is a schematic structural diagram of hardware of an electronic device according to an embodiment of the present application. As illustrated in FIG. 9, the device includes at least one processor 901 and a memory 902, and FIG. 9 uses one processor 901 as an example.

The at least one processor 901 and the memory 902 may be connected via a bus or in another fashion, and FIG. 9 uses the bus as an example.

The memory 902, as a non-volatile computer readable storage medium, may be configured to store non-volatile software programs, non-volatile computer executable programs and modules, for example, the program instructions/modules corresponding to the method in the embodiments of the present application (for example, the local area network judging module 701, the network connecting module 702, the VPN module 703 and the control module 704 as illustrated in FIG. 7). The non-volatile software programs, instructions and modules stored in the memory 901, when being executed, cause the processor 902 to perform various function applications and data processing of the apparatus for controlling the smart device, that is, performing the method for controlling the smart device in the above method embodiments.

The memory 902 may also include a program storage area and a data storage area. The program storage area may store an operating system and an application implementing at least one function. The data storage area may data created according to use of the apparatus for controlling the smart home device. In addition, the memory 902 may include a high speed random access memory, or include a non-volatile memory, for example, at least one disk storage device, a flash memory device, or another non-volatile solid storage device. In some embodiments, the memory 902 optionally includes memories remotely configured relative to the processor 901. These memories may be connected to a control apparatus over a network. Examples of the above network include, but not limited to, the Internet, Intranet, local area network, mobile communication network and a combination thereof.

The one or more modules are stored in the memory 902, and when being executed by the at least one processor 901, perform the method for controlling the smart device in any of the above method embodiments.

The product may perform the method according to the embodiments of the present application, has corresponding function modules for performing the method, and achieves the corresponding beneficial effects. For technical details that are not illustrated in detail in this embodiment, reference may be made to the description of the methods according to the embodiments of the present application.

An embodiment of the present application provides a computer program product. The computer program product includes a computer program stored on a non-volatile computer-readable storage medium. The computer program includes program instructions. The program instructions, when being executed by a computer, may cause the computer to perform the method for controlling the smart device in any of the above method embodiments, for example, performing steps 201 to 204 in the method as illustrated in FIG. 2, and implementing the functions of the functional modules as illustrated in FIG. 7.

The above described apparatus embodiments are merely for illustration purpose only. The units which are described as separate components may be physically separated or may be not physically separated, and the components which are illustrated as units may be or may not be physical units, that is, the components may be located in the same position or may be distributed into a plurality of network units. A part or all of the modules may be selected according to the actual needs to achieve the objectives of the technical solutions of the embodiments.

According to the above embodiments of the present application, a person skilled in the art may clearly understand that the embodiments of the present application may be implemented by means of hardware or by means of software plus a necessary general hardware platform. Persons of ordinary skill in the art may understand that all or part of the steps of the methods in the embodiments may be implemented by a program instructing relevant hardware. The program may be stored in a computer-readable storage medium and may be executed by at least one processor. When the program runs, the steps of the methods in the embodiments are performed. The storage medium may be any medium capable of storing program codes, such as read-only memory (ROM), a random access memory (RAM), a magnetic disk, or a compact disc-read only memory (CD-ROM).

Finally, it should be noted that the above embodiments are merely used to illustrate the technical solutions of the present application rather than limiting the technical solutions of the present application. Under the concept of the present application, the technical features of the above embodiments or other different embodiments may be combined, the steps therein may be performed in any sequence, and various variations may be derived in different aspects of the present application, which are not detailed herein for brevity of description. Although the present application is described in detail with reference to the above embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from the spirit and scope of the technical solutions of the embodiments of the present application.

## Claims

1. A method for controlling a smart device, comprising:
judging whether a control terminal and a selected smart home device are located in a same local area network;
establishing a connection to a smart home device management platform over the local area network if the control terminal and the selected smart home device are located in the same local area network, the smart home device management platform recording one or a plurality of smart home devices;
enabling a virtual private network (VPN) module and establishing a connection to the smart home device management platform over a VPN channel if the control terminal and the selected smart home device are not located in the same local area network; and
controlling a corresponding smart home device by the smart home device management platform.

2. The method according to claim 1, further comprising:
connecting to a local area network where a newly added smart home device is located;
generating device identifier information corresponding to the newly added smart home device; and
sending the device identifier information to the smart home device management platform, and recording the newly added smart home device in the smart home device management platform.

3. The method according to claim 1, wherein judging whether the control terminal and the selected smart home device are located in the same local area network comprises:
sending detection information to a smart home device recorded in the smart home device management platform according to a local area network address of the smart home device;
judging whether response information returned by the smart home device is received within a predetermined time period, the response information being triggered and generated by the smart home device according to the detection information;
determining that the control terminal and the selected smart home device are located in the same local area network if the response information returned by the smart home device is received within the predetermined time period; and
determining that the control terminal and the selected smart home device are located in different local area networks if the response information returned by the smart home device is not received within the predetermined time period.

4. The method according to claim 1, wherein the judging whether the control terminal and the selected smart home device are located in the same local area network comprises:
broadcasting detection information within a current local area network;
judging whether response information returned by at least one smart home device recorded in the smart home device management platform is received, the response information being triggered and generated by the smart home device according to the detection information;
determining that the control terminal and the selected smart home device are located in the same local area network if the response information returned by the smart home device is received within the predetermined time period; and
determining that the control terminal and the selected smart home device are located in different local area networks if the response information returned by the smart home device is not received within the predetermined time period.

5. An apparatus for controlling a smart device, comprising:
a local area network judging module, configured to judge whether a control terminal and a selected smart home device are located in a same local area network;
a network connecting module, configured to establish a connection to a smart home device management platform by the local area network when the smart device and the selected smart home device are located in the same local area network, the smart home device management platform recording one or a plurality of smart home devices;
a VPN module, configured to establish a connection to the smart home device management platform over a VPN channel; and
a control module, configured to control a corresponding smart home device by the smart home device management platform.

6. The apparatus according to claim 5, further comprising: a registering module; wherein
the network connecting module is further configured to be connected to a local area network where a newly added smart home device is located; and
the registering module is configured to generate device identifier information corresponding to the newly added smart home device; and send the device identifier information to the smart home device management platform, and record the newly added smart home device in the smart home device management platform.

7. The apparatus according to claim 5, wherein the local area network judging module comprises: a detecting unit, a receiving unit and a judging unit; wherein
the detecting unit is configured to send detection information to a smart home device recorded in the smart home device management platform according to a local area network address of the smart home device;
the receiving unit is configured to receive response information returned by the smart home device within a predetermined time period, the response information being triggered and generated by the smart home device according to the detection information;
the judging unit is configured to judge whether the response information returned by the smart home device is received within a predetermined time period; and
determine that the control terminal and the selected smart home device are located in the same local area network if the response information returned by the smart home device is received within the predetermined time period, and determine that the control terminal and the selected smart home device are located in different local area networks if the response information returned by the smart home device is not received within the predetermined time period.

8. The apparatus according to claim 5, wherein the local area network judging module comprises: a detecting unit, a receiving unit and a judging unit; wherein
the detecting unit is configured to broadcast detection information within a current local area network;
the receiving unit is configured to receive response information returned by a smart home device recorded in the smart home device management platform, the response information being triggered and generated by the smart home device according to the detection information;
the judging unit is configured to judge whether the response information returned by the at least one smart home device recorded in the smart home device management platform is received; and
determine that the control terminal and the selected smart home device are located in the same local area network if the response information returned by the smart home device is received within the predetermined time period, and determine that the control terminal and the selected smart home device are located in different local area networks if the response information returned by the smart home device is not received within the predetermined time period.

9. A system for controlling a smart device, comprising: a smart home device management platform, a router and a control terminal; wherein
the router is configured to provide at least two local area networks that are isolated from each other, and smart home devices are located in one of the local area networks provided by the router;
the smart home device management platform is connected, over a VPN channel, to the local area network where the smart home device is located; and
the control terminal comprises the apparatus for controlling the smart device as defined in any one of claims 5 to 8, and is configured to, when accessing the local area network provided by the router,
judge whether the control terminal and a selected smart home device are located in a same local area network, establish a connection to a smart home device management platform over the local area network and send a control instruction if the control terminal and the selected smart home device are located in the same local area network; and enable a virtual private network (VPN) module, establish a connection to the smart home device management platform over a VPN channel and send a control instruction if the control terminal and the selected smart home device are not located in the same local area network; and
the smart home device management platform is configured to control the selected smart home device according to the received control instruction.

10. The system according to claim 9, wherein the router is configured to provide, by configuring different service set identifiers, at least two local area networks that are isolated from each other, each local area network providing a DHCP service and a DNS service that are independently configured.

11. An electronic device, comprising:
at least one processor; and
a memory communicably connected to the at least one processor; wherein
the memory stores an instruction program executable by the at least one processor, wherein, the instruction program, when being executed by the at least one processor, cause the at least one processor to perform the method as defined in any one of claims 1 to 4.

12. A computer program product, comprising: a non-volatile computer-readable storage medium and computer program instructions stored in the non-volatile computer-readable storage medium; wherein the computer program instructions comprise instructions, which, when being executed by a processor, cause the processor to perform the method as defined in any one of claims 1 to 4.
